# EUROPEAN PATENT SPECIFICATION

(11) **EP 0 514 117 B1**
(45) Date of publication and mention of the grant of the patent: **24.04.1996**
(21) Application number: 92304243.6
(22) Date of filing: 12.05.1992
(51) Int. Cl.: G21C 3/322

(54) **Part length rod fuel assembly with steam-water separator for boiling water reactor**
Teillängenbrennstabbündel mit Dampfabscheider für einen Siedewasserreaktor
Assemblage de combustible ayant des barreaux à longueur partielle avec séparateur de vapeur pour réacteurs à eau bouillante

(30) Priority: 17.05.1991 US 702644
(43) Date of publication of application: 19.11.1992
(73) Proprietor: GENERAL ELECTRIC COMPANY, Schenectady, NY 12345 (US)
(72) Inventor: Dix, Gary Errol, Saratoga, California 95070 (US)
(74) Representative: Lupton, Frederick

(56) References cited:
- EP-A- 0 336 203
- DE-U- 8 802 565
- FR-A- 2 072 154
- GB-A- 1 169 868
- GB-A- 1 238 849

## Description

This invention relates to nuclear fuel bundles having so called "part length rods." Such fuel bundles include upper and lower tie plates at opposite ends interior of a vertical channel with a matrix of vertically upstanding fuel rods held therebetween. Water enters through the lower tie plate, is confined to a flow path around the matrix of fuel rods by the channel, and generates steam when the fuel rods of the fuel bundle undergo nuclear chain reaction. A mixture of steam and water exits through the upper tie plate. The part length rods within the nuclear fuel bundle extend less than the full distance to the upper tie plate and function to provide -- among other things -- a low pressure drop vent path for steam in the upper two phase (water and steam) portion of the fuel bundle. This invention includes the addition of separation devices overlying the part length rods.

### BACKGROUND OF THE INVENTION

Ueda Japanese Patent Showa 52-50498 disclosed the use of part length fuel rods for the creation of an improved fuel to moderator ratio in the upper two phase region of a fuel bundle. A fuel bundle was disclosed in which clustered part length fuel rods defined a large, central, generally conical shaped void in the upper two phase region of the fuel bundle.

Two embodiments were disclosed in the Ueda reference. A first embodiment includes a large conical water rod occupying the large central conical void defined collectively by the part length rods. A second, and apparently preferred embodiment disclosed the conical region otherwise unoccupied.

Regarding this latter design, testing has established that while nuclear improvements in the upper two phase region in the cold state might be realized, adverse heat transfer performance, especially in terms of adverse critical power may be realized by large central void regions in a boiling water reactor fuel bundle. Specifically, the large defined void results vapor being concentrated to the region. Unfortunately, surrounding portions of the two phase region tends to flow into the steam vent area. This results in the diversion of significant amounts of liquid coolant away from the heated rod surfaces adjacent the void, this liquid coolant being entrained in the accelerated steam flow within the large defined conical void. There results a reduced flow of liquid adjacent the full length fuel rods which surround the large void. This reduced flow rate has a corresponding reduced critical power. Overall fuel bundle efficiency is reduced.

In European Patent Application Publication No. 336,203, we maintained the nuclear benefits and removed the adverse thermal hydraulic effects by using generally smaller open flow channels dispersed across the two phase region of the fuel bundle lattice. The dispersed flow channels realized the natural tendency of the vapor phase of the two phase mixture to migrate ("drift") toward the low resistance flow paths where the realized flow was primarily vapor. It has been found that such dispersed flow paths are favourable for a BWR fuel assembly since preferential diversion of vapor away from the fueled rods has combined nuclear, stability, and thermal hydraulic advantages.

### SUMMARY OF THE INVENTION

In a nuclear fuel bundle for boiling water reactor having one or more part length rods, steam-water separation devices are disclosed for preventing water entry into and water entrainment into the steam vent volume overlying the part length rods. The nuclear fuel bundle is conventional insofar as it includes a lower tie plate for supporting an array of side-by-side fuel rods and permitting the entry of water to the fuel bundle. An upper tie plate is utilized for maintaining the fuel rods in parallel vertical side-by-side relation and permitting the outflow of steam and water from the top of the fuel bundle in a two phase flow. A channel between the tie plates confines the flow of water between the tie plates and separates two phase flow interior of the fuel bundle from the adjacent core bypass volume surrounding the fuel bundle. At least one of the fuel rods in the fuel bundle extends less than the full length from the lower tie plate to the upper tie plate -- termination of these fuel rods occurs short of full extension to the upper tie plate so that a void volume is defined overlying the end of the part length rods. Two classes of separation devices are disclosed. A first type of device fits to the end of part length rods and is primarily intended for preventing water passing along the surface of the part length rod adjacent the end of the part length rod from entering the volume overlying the part length fuel rod. A second type of device resides in the volume overlying part length rods. This device serves the purpose of ejecting water entrained into the steam vent volume overlying part length rods. These devices can be extended and interconnected. In either case, improved concentration of steam to the vent volume overlying the part length rods with high liquid fraction residing in the surrounding full length rods results.

### OTHER OBJECTS, FEATURES AND ADVANTAGES

A fundamental difficulty in BWR fuel design results from the large variations in moderator density caused by vapor formation. Current design approaches provide some compensation for this by introducing captive-liquid within the fuel bundle. Examples are the various water-rod and water-cross designs. While these approaches provide for effective neutron moderation, their associated blockage of normal coolant flow area causes entirely adverse thermal hydraulic effects. This is particularly true as the blockages become large. In contrast, the steam-vent approach provides synergistic benefits for both neutron moderation and thermal hydraulics.

Diverting significant vapor into a low-resistance flow path will allow the average vapor velocity to increase, and thereby reduce the average void fraction. More importantly, local void fractions around the fuel rods will be reduced even more due to the removal of vapor from that region. In contrast, the flow blockages caused by captive-liquid regions force all of the normal liquid and vapor to flow together around the fuel rods, at even higher velocities. This increases local void fractions around the fuel rods. Thus the neutron moderation benefits with steam-vent designs can easily exceed those achieved using large captive liquid regions.

With steam-vent designs, the higher liquid fraction adjacent to the fuel rods will improve critical power performance. The low resistance flow path for vapor will reduce pressure drop in the two-phase region. Removal of normal spacer structure within the steam-vent path will reduce the pressure drop from each spacer, allowing for more spacers to be added (with associated critical power and rod-bow benefits). Channel stability will be improved both by the reduced two-phase pressure drop, and by the damping effect from a separate high velocity flow path within the fuel bundle.

An object of this invention is to disclose a first class of separation devices for inhibiting the entry of water into the steam vent volumes overlying the part length rods. According to this aspect of the invention, the part length rod is provided with an attachment at its upper terminal end. This attachment can be either a flared end, deflecting tabs, or a spirally wound piece of metal, hereinafter referred to as a swirl vane. Steam and water passing along the length of the outside of the part length rod adjacent the rod end impact the attachment. Water -- with its higher mass -- is deflected. Steam -- with its lower mass -- continues substantially undeflected upwardly into the vent volume overlying the part length rod. There results a reduction of water introduction into the steam vent volume overlying the part length rod.

An additional object of this invention is to place steam separation devices in the region overlying one or more part length rods. These devices can be placed at discrete locations, some distance from the part length rods, or they can extend continuously through the void volume overlying the part length rods. Preferable attachment and suspension of such devices is from spacers overlying the ends of the part length rods, or from the upper tieplate. The suspended devices can include twisted metal strips, hereinafter referred to as swirl vanes, cones, or other steam separation devices. Remaining water introduced into and entrained into the steam vent volume is ejected.

An advantage of both the attachment to the end of part length rods and the separation device overlying the end of part length rods is flexibility in placement of part length rods while maintaining more effective steam vent channels side-by-side with surrounding higher liquid fraction about the full length rods. There results improved nuclear reaction, improved heat transfer, improved stability and lower pressure drop.

### BRIEF DESCRIPTION OF THE DRAWINGS

Fig. 1 is a perspective of a fuel bundle having a portion of the channel broken away to expose the contained part length fuel rods with the separation devices of this invention overlying the ends of the part length fuel rods;
Fig. 2 illustrates a single part length rod with a flared end for deflecting water passing along the outside of the part length rod at the upper end of the part length rod;
Fig. 3 illustrates a single part length rod with an attached swirl vane for imparting radial velocity to water carried into the volume overlying the part length rod;
Fig. 4 illustrates a single part length rod with deflector tabs at the top of the rod;
Fig. 5 illustrates a single part length rod in an array of full length rods with a separation device in the form of a cone attached to an overlying spacer;
Fig. 6 illustrates a single part length rod with a swirl vane attached to the overlying spacer, the swirl vane having a diameter in the range of the underlying part length rod; and,
Fig. 7 illustrates a single part length rod with a swirl vane attached to an overlying spacer, the swirl vane having a diameter exceeding that of the underlying part length rod.
Fig. 8 illustrates an array of adjacent part length rods with a matrix of swirl vanes attached to an overlying spacer, the number of swirl vanes in the matrix being equal to or less than the number of part length rods below;
Fig. 9 illustrates an array of adjacent part length rods with a large swirl vane attached to an overlying spacer, the swirl vane having a diameter comparable to the size of the underlying array of part length rods;
Fig. 10 illustrates a part length fuel rod with an attached overlying swirl vane that extends axially between spacers;
Fig. 11 illustrates an array of adjacent part length fuel rods with an overlying swirl vane of comparable diameter, that extends axially between spacers.
Fig. 12 illustrates an array of adjacent part length fuel rods with an overlying matrix of swirl vanes that extend axially between spacers, the number of swirl vanes in the matrix being equal to or less than the number of part length rods below;
Fig. 13 illustrates an array of adjacent part length fuel rods of unequal length with an overlying matrix of swirl vanes that extend axially between spacers, the number of swirl vanes in the matrix being equal to or less than the number of part length rods below;
Fig. 14 illustrates a construction similar to Fig. 11, except that the overlying swirl vane is formed integral with a water rod that extends upward from the inlet region of the fuel assembly;
Fig. 15 illustrates a construction similar to Fig. 12, except that the overlying matrix of swirl vanes is formed integral with a water rod that extends upward from the inlet region of the fuel assembly;
Fig. 16 illustrates a representative fuel assembly configuration wherein water rods are placed adjacent to a removable swirl vane matrix of types as illustrated in Figs. 12 or 13.

### DESCRIPTION OF THE PREFERRED EMBODIMENT

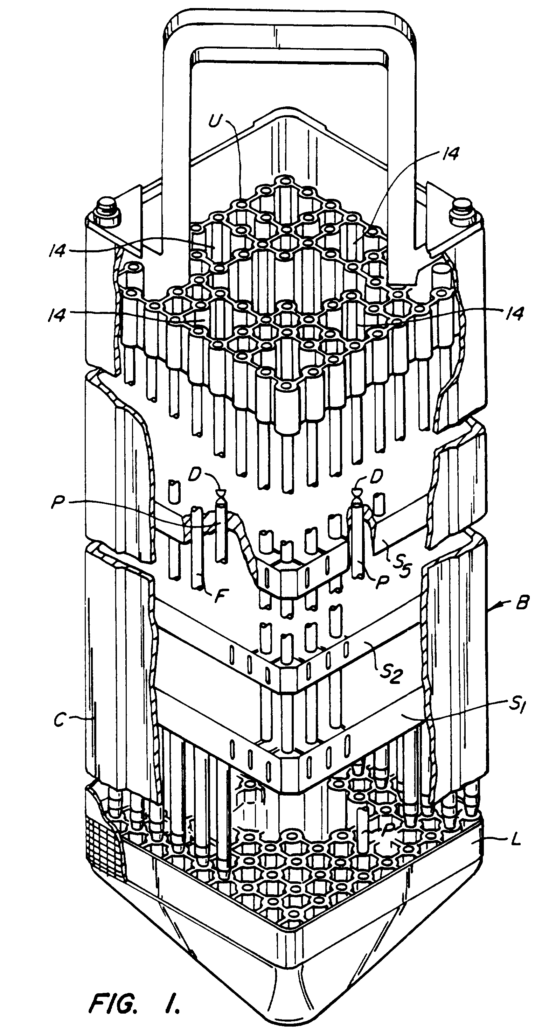

Referring to Fig. 1, a fuel bundle B is illustrated. Bundle B includes a lower tie plate L, an upper tie plate U and a 9-by-9 matrix of discrete fuel rods F. A channel C surrounds the respective fuel rods and extends from the lower tie plate L to the upper tie plate U. Lower tie plate L supports the fuel rods F in a side-by-side matrix; upper tie plate U assures that the fuel rods are maintained in vertically upstanding relation.

The fuel rods extend over a distance of approximately 4,06 m (160 inches) and are flexible. This being the case, a group of spacers S (typically in the order of 7) maintain the side-by-side relationship of the fuel rods F. In Fig. 1 spacers S1, S2 and S5 illustrate three of the normally seven evenly placed spacers extending along the length of the fuel bundle B.

Operation of the fuel bundle can be summarized. Typically, water moderator enters through lower tie plate L at defined apertures between the matrix of fuel rods F. The water flow is confined by channel C to flow outwardly through upper tie plate U. As the water moderator passes upwardly through the fuel bundle, steam is generated in increasingly higher fractions. Finally, at the top of the fuel bundle and up and through upper tie plate U, the discharge of water and steam occurs.

Fuel bundle B contains part-length rods P. Such part-length rods P are disclosed in the aforesaid reference. It will be noted that the two partial length rods P illustrated are spaced apart. Additionally, and overlaying the part-length rods, thre is defined an open spatial interval in the fuel bundle which interval is designated 14. As set forth in this original disclosure, these disbursed flow channel realize the natural tendency of the vapor phase of the two-phase mixture to migrate or drift towards the low resistance flow paths formed at the void volumes 14. It has been found that such disbursed flow paths are favorable to provide an improved fuel to moderator ratio in the upper two phase region of the bundle as well as to provide a low pressure drop path for the venting of steam which imparts combined nuclear, stability and thermal hydraulic advantages.

At the end of each partial length rod P, I illustrate a separation device D. Generally stated, the purpose of the separation devices D as set forth in this specification is to separate water from the volumes 14 which may either be entered into or be entrained into the upwardly venting steam within volumes 14. This enhances the natural tendency for steam to flow in these volumes such that even better steam venting benefits can be achieved without the part length rods being spaced apart.

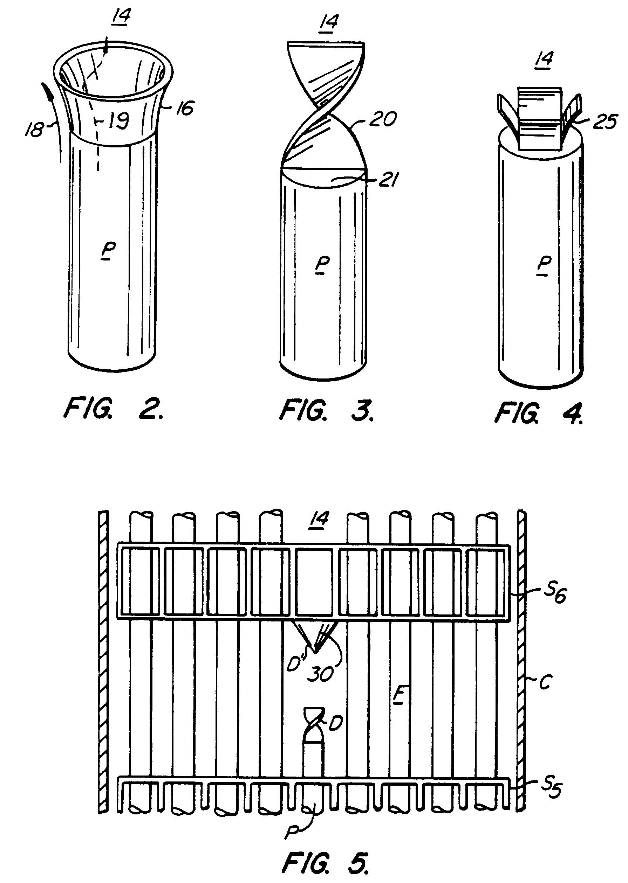

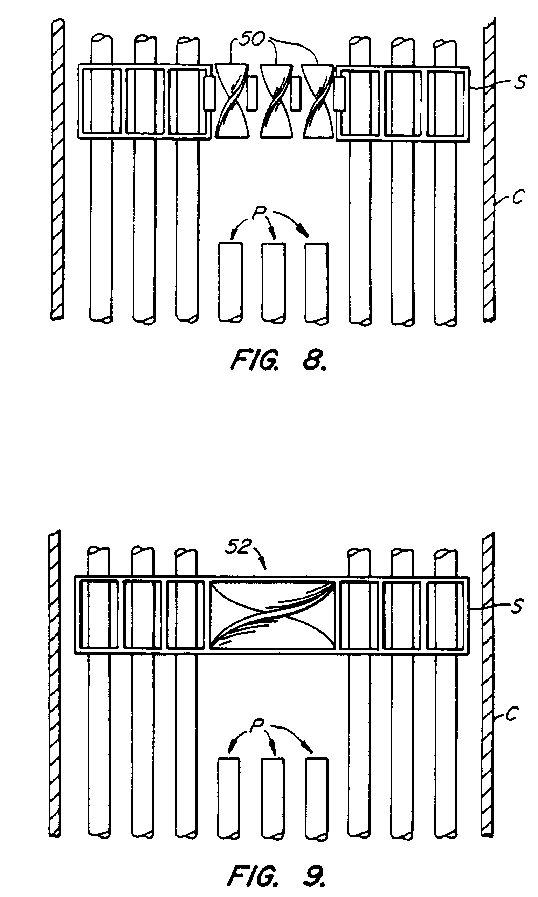

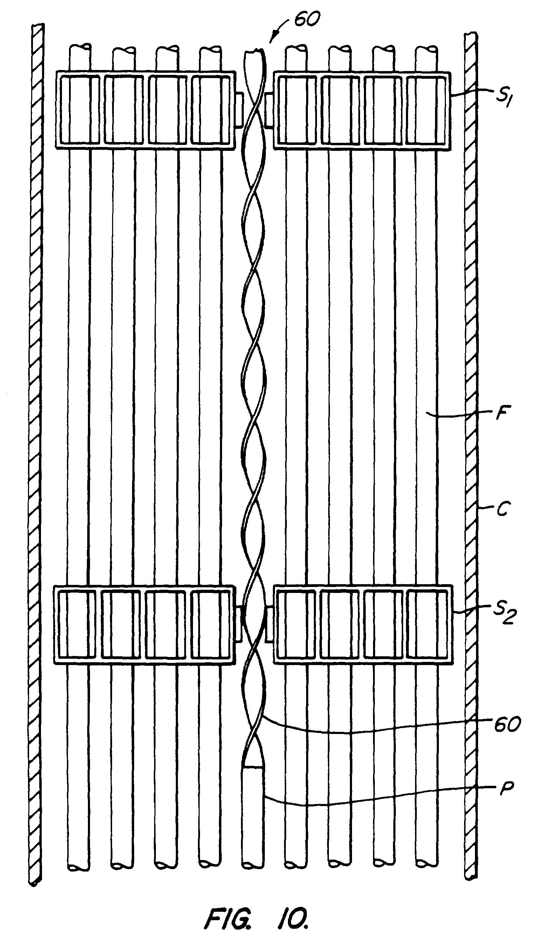

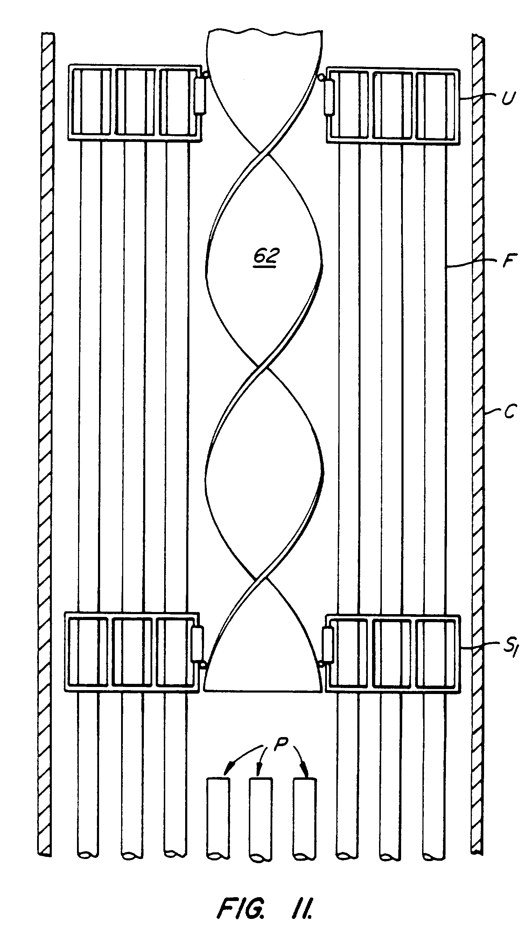

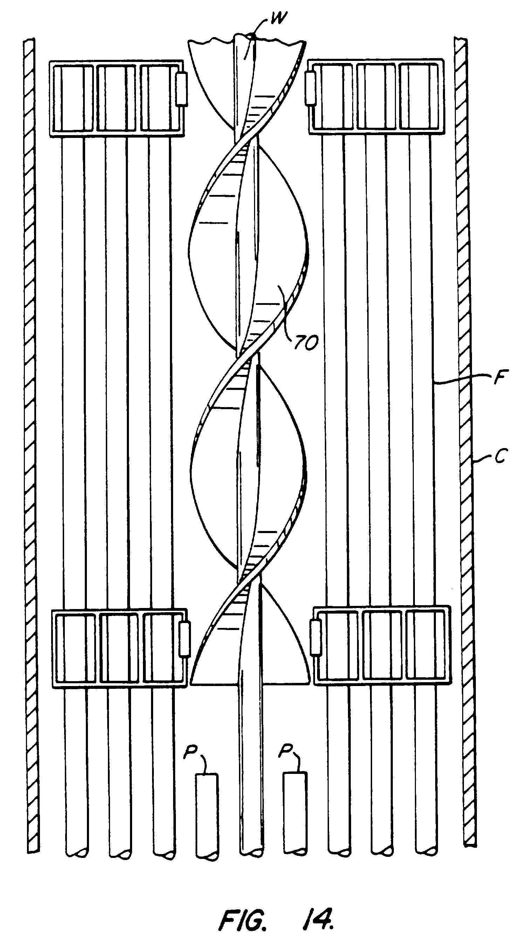

Summarizing the remainder of the specification is beneficial at this juncture. Specifically, Figures 2, 3 and 4 disclose various separation devices which may be placed at the end of individual fuel rods. Figures 5, 6, 7, 8, and 9 disclose separation devices mounted to spacers. Figures 11, 12 and 13 disclose separation devices which can also be mounted to spacers, but preferably pass through the spacers and are suspended form the upper tie plate. Figure 5 shows a combination of a separation device mounted at the end of a part-length fuel rod as well as a separation device attached to a spacer. Figure 10 discloses a separation device combined with and extending continuously from the end of a part length rod through overlying spacers. it will be understood that more than one such combined device can be placed in the fuel assembly. Figures 8, 9, 11, 12, 13, 14 and 15 disclose arrays of adjacent part length rods with overlying separation devices. Such part length rod arrays can be distributed in various arrangements within the fuel assembly. Figures 11, 12, 13, 14 and 15 disclose these separation devices extending through two or more spacers. These extended devices can pass through and be suspended from the upper tie plate to maximize steam venting and allow for top removal of the devices. Figures 14, 15 and 16 disclose devices to incorporate water rods within or adjacent to the steam vent volume to improve moderator distribution within the fuel assembly.

With reference to Figs. 2, 3 and 4, the reader will understand that the partial length rod P is the only such rod shown. It will be understood that any one or more of the partial length rods P could be placed in the rod array as illustrated in Figure 5.

In Fig. 2 the partial length rod P has at the end thereof an outwardly flaring bell-shaped cone 16. The purpose of the cone 16 is to divert upwardly flowing water outwardly and away from volume 14 overlying the part-length rod P; such deflection is illustrated at arrow 18. At the same time, steam 19, having a lighter mass, can divert its flow into the volume 14 overlying the part-length rod.

Referring to Fig. 3, part-length rod P has attached to the end thereof a swirl vane 20 the twist here being oriented over 180° in the counterclockwise direction as the band 20 extends upwardly from the end of the part-length rod 21 into the volume 14 overlying the part-length rod. The function of band 20 is easily understood. It imparts to dense water particles an outward centrifugal vector; steam being of lighter mass continues into the upward volume 14.

Finally, and referring to Fig. 4, part-length rod P is shown with an array of outwardly deflecting tabs 25. Outwardly deflecting tabs 25 have the function of deflecting outwardly the dense water and permitting steam to continue upwardly in an uninterrupted path.

At this point the reader should understand that many other separation devices at the end of the part-length rods can be utilized. All that is required is that the devices be capable of deflecting outwardly the denser water flow while permitting steam to continue vertically upwardly.

Referring to the view of Fig. 5, a part-length rod P termination shortly above a spacer 5 is shown at a section of a fuel bundle similar to that illustrated in Fig. 1. The particular separation device D utilized is similar to those separation devices illustrated in Figs. 1 and 3.

Fig. 5 shows an additional aspect of this invention. Specifically, spacer 6 is shown supporting a second separation device D', device D' taking the form of a downwardly disposed cone 30. Referring to cone 30, it can be seen that the apex of the cone is disposed towards the partial length rod P; the truncated base of the cone is mounted upwardly into spacer S6 which is the spacer immediately overlying the part-length rod.

The function of the cone is easy to understand. Heavier liquid particles are directed outwardly to the adjacent fuel rods F. Steam continues upwardly in the volume 14 overlying the part-length rod P.

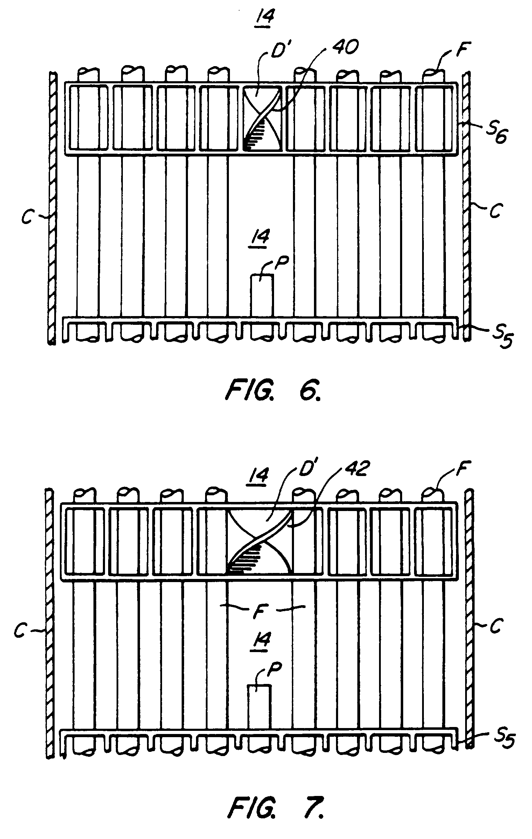

Referring to Figs. 6 and 7, the disposition of an alternate separation device D' at the spacer S6 is illustrated. In Figure 6 the matrix defined by the spacer S6 maintains a swirl vane 40. Like the separation device of Fig. 3, swirl vane 40 is twisted over 180° and serves to centrifugally separate water from the volume 14 overlying part-length rod P. It will be understood that separation device D' is effective in separating out water that may be entrained into the steam vent of volume between the part-length rod P and spacer S6.

The construction of Fig. 7 is similar, the only exception being that the swirl vane 42 is of a larger width occupying substantially the full volume within the spacer 6 between the fuel rods F.

Fig. 8 illustrates a similar construction, with an array of adjacent part length rods P terminating below spacer S. Spacer S supports an array of overlying swirl vanes at a distance above the ends of part length rods P. As the reader will understand, the disclosed side elevation only illustrates three part length rods and associated swirl vanes. More could be used. For example, a 3 by 3 matrix adjacent of part length rods could be used.

Fig. 9 illustrates a similar construction to Fig. 8. Here a larger diameter swirl vane 52 attached to spacers overlies an array of adjacent part length rods P. The part length rods P are configured typically in a 3 by 3 square pattern. More could be used.

Fig. 10 illustrates an extended swirl vane 60 attached to the end of a part length rod. Part length rod P and swirl vane 60 form a unitary structure. This rod P and swirl vane 60 mount in the same manner as the side-by-side full length fuel rod F. Consequently, part length rod P can be removed by grasping swirl vane 60 or any fixture attached to swirl vane 60 for that purpose. The swirl vane can also be constructed with two crossed (cruciform sectioned) metal bands to increase strength for the swirl vane of this design The part length rod and swirl vane are here shown extending between two spacers S1 and S2.

Fig. 11 illustrates a single large swirl vane 62 overlying a number of adjacent part length rods (for example a 3 by 3 matrix of part length rods P). This single large swirl vane 62 is attached between spacers S1 and upper tie plate U. Alternately, provision can be made for attachment of the large swirl vane between two adjacent spacers (See Fig. 10). Provision of an opening for this device to pass through the upper tie plate U maximizes the steam venting effectiveness of this design. Mounting the device to the upper tie plate allows for removal of the device from the top, thus providing access to the part length rods underlying the device.

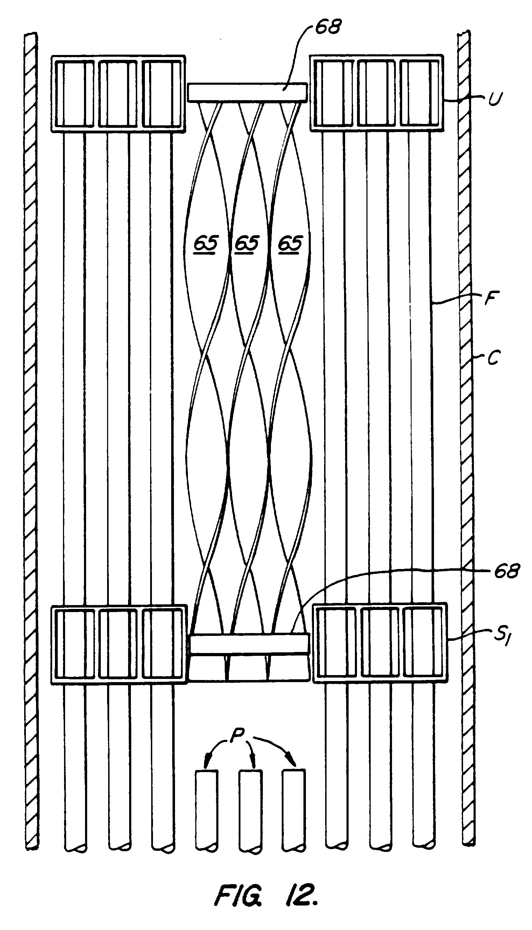

The construction of Fig. 12 is similar, except the single large swirl vane device is replaced with a unitized matrix of smaller swirl vanes. The matrix of swirl vanes here shown and here illustrated is 3 by 3. This unitized matrix is illustrated with surrounding bands 68 to provide positioning at the fuel assembly spacers S7. This device preferably passes through and is suspended from the upper tie plate U.

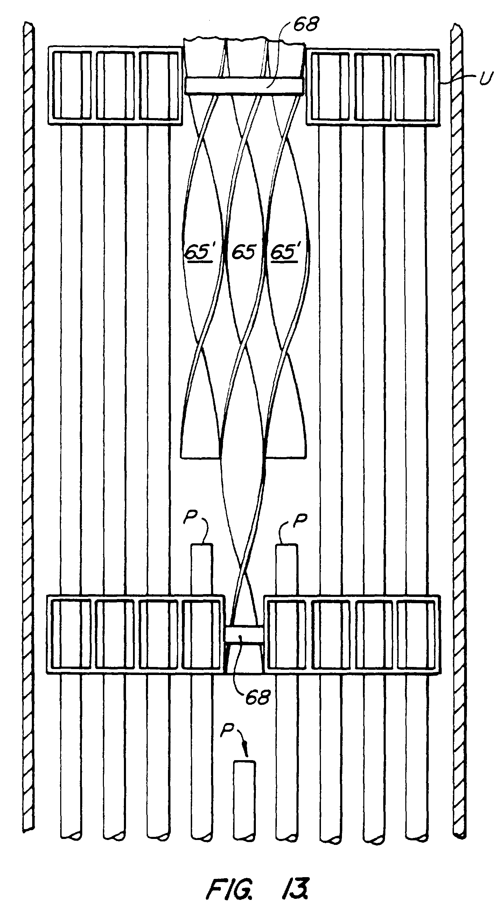

The construction of Fig. 13 is similar, except the underlying part length rods P are of unequal height. Consequently, the overlying unitized matrix of swirl vanes 65, 65' is of unequal length.

The large steam vent volume may reduce local neutron moderation. Therefore, it may be necessary to improve moderator distribution by incorporating additional water into the central portion of the fuel assembly. Figures 14, 15 and 16 disclose devices wherein water rods are incorporated to the swirl vane structure of this invention.

Fig. 14 illustrates an alternate construction for the large swirl vane of Fig. 11, wherein a central water rod W is placed integral with the swirl vane. The underlying central part length rod is removed to allow for downward extension of the water rod W. The water rod W is shown the same diameter of the fuel rods F and part length rods P; other so-called large water rods W may be used where the diameter exceeds the diameter of the fuel rods F.

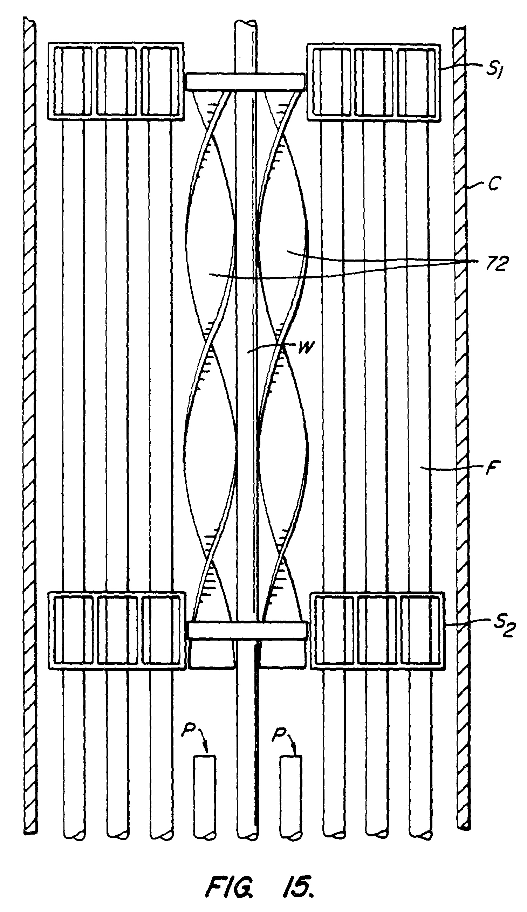

Fig. 15 shows similar construction for a water rod integral within a unitized swirl vane matrix 72.

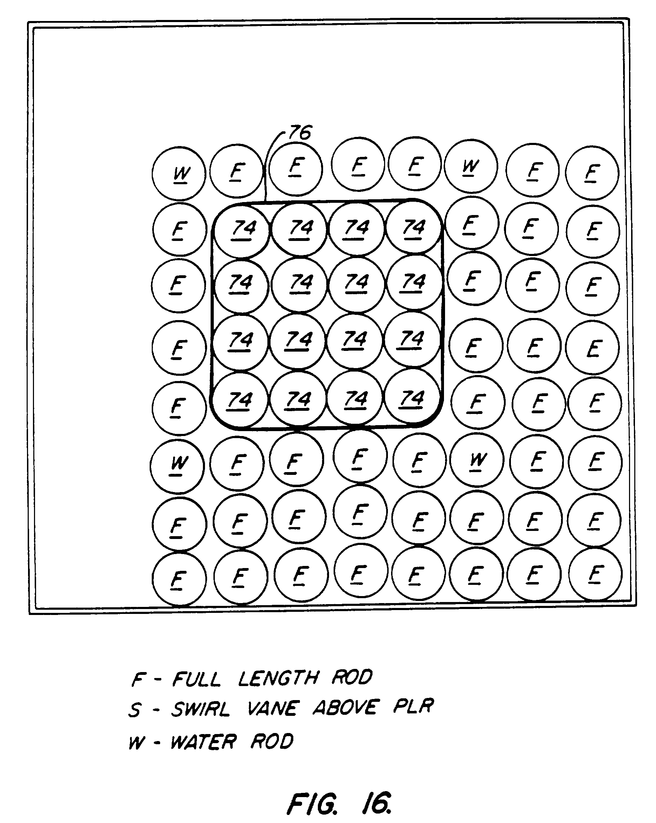

Fig. 16 illustrates a representative fuel assembly configuration using a swirl vane matrix 76 with individual swirl vanes 74 such as illustrated in Fig. 12 or Fig. 13. Water rods W are placed adjacent to the removable swirl vane matrix 76. Such placement of water rods also allows for standard axial positioning of the fuel assembly spacers S1 and S2 (See Fig. 15).

The reader will understand that in my description of separation devices D', I contemplate any type of separation device overlying the part-length rod, this separation device acting to eject either entering or entrained water from the void volume overlying the end of the part-length rod.

## Claims

1. A fuel bundle (B) for a boiling water nuclear reactor, said fuel bundle (B) including;
a lower tie plate (L) for supporting a matrix of vertically upstanding fuel rods (F) and defining apertures for the inflow of water to said fuel bundle;
an upper tie plate (U) for maintaining said matrix of fuel rods (F) in vertical upstanding relation and defining apertures for permitting the outflow of water and generated steam;
a channel (C) surrounding said fuel bundle (B) and extending from said lower tie plate (L) to said upper tie plate (U) for confining fluid flow between said tie plates and through said matrix of fuel rods;
a plurality of spacers (S) within said channel (C) and around said fuel rods (F) for maintaining the side-by-side spacing of said fuel rods (F) between said tie plates; and
at least one of said fuel rods being a part length fuel rod (P) resting on and supported by said lower tie plate (L) and terminating at an upper end below said upper tie plate (U), said part length rod (P) defining with respect to surrounding full length rods (F) a void volume (14) overlying said part length rod (l) for defining a steam vent path (14) between the upper end of said part length rod (P) and said upper tie plate (U);
characterized by
a separation device (16...74) supported by said fuel bundle (B) and placed in said steam vent path (14) overlying said part length rod (P), said separation device defining means for deflecting water from said steam vent path (14) to said surrounding full length rods (F).

2. A fuel bundle (B) as recited in Claim 1 and wherein said separation device is attached to the end of said part length rod (16, 20, 25), is attached to one of said spacers (30, 40, 42, 50, 52), or is attached to said upper tie plate (62, 65, 65').

3. A fuel bundle (B) as recited in Claim 1 and wherein said separation device includes a swirl vane (20).

4. A fuel bundle (B) as recited in Claim 1 and wherein said separation device includes deflecting tabs (25).

5. A fuel bundle (B) as recited in Claim 1 and wherein said separation device includes a cone (30), said cone (30) being downwardly disposed with the apex thereof disposed towards the end of said part length rod.

6. A fuel bundle (B) as recited in Claim 1 and wherein a plurality of part length rods are placed within said fuel bundle and a separation device (50, 52, 62, 65', 70, 72, 74') overlies more than one of said part length rods.

7. A fuel bundle (B) as recited in Claim 1 and wherein said upper tie plate (U) defines an aperture and said separation device (62, 65, 65') passes through said upper tie plate at said aperture.

8. A fuel bundle as recited in Claim 1 and wherein said separation device (70, 72) includes a water rod (W) with said separation device.

## Patentansprüche

1. Brennstoffbündel (B) für einen Siedewasser-Kernreaktor, wobei das Brennstoffbündel (B) enthält:
eine untere Ankerplatte (L) zur Halterung einer Matrix von vertikal aufrecht stehenden Brennstoffstäben (F) und zur Bildung von Öffnungen für die Einströmung von Wasser zu dem Brennstoffbündel;
eine obere Ankerplatte (U) zur Halterung der Matrix von Brennstoffstäben (F) in einer vertikal aufrechten Relation und zur Bildung von Öffnungen, die die Ausströmung von Wasser und erzeugtem Dampf gestatten;
ein Kanalstück (C), das das Brennstoffbündel (B) umgibt und sich von der unteren Ankerplatte (L) zur oberen Ankerplatte (U) erstreckt zum Einschließen einer Fluidströmung zwischen den Ankerplatten und durch die Matrix von Brennstoffstäben;
mehrere Abstandshalter (S) in dem Kanalstück (C) und um die Brennstoffstäbe (F) herum zur Aufrechterhaltung des seitlichen Abstandes der Brennstoffstäbe (F) zwischen den Ankerplatten; und
wobei wenigstens einer der Brennstoffstäbe ein Teillängen-Brennstoff stab (P) ist, der auf der unteren Ankerplatte (L) ruht und von dieser gehaltert ist und an einem oberen Ende unterhalb der oberen Ankerplatte (U) endet, wobei der Teillängenstab (P) in Bezug auf die umgebenden Vollängenstäbe (F) ein freies Volumen (14) bildet, das über dem Teillängenstab (P) liegt, zur Ausbildung einer Dampfableitbahn (14) zwischen dem oberen Ende des Teillängenstabes (P) und der oberen Ankerplatte (U); gekennzeichnet durch eine Trennvorrichtung (16...74), die von dem Brennstoffbündel (B) gehaltert ist und in der Dampfableitbahn (14) angeordnet ist, die über dem Teillängenstab (P) liegt, wobei die Trenneinrichtung Mittel bildet zum Ablenken von Wasser aus der Dampfableitbahn (14) zu den umgebenden Vollängenstäben (F).

2. Brennstoffbündel (B) nach Anspruch 1, wobei die Trennvorrichtung an dem Ende des Teillängenstabes (16, 20, 25), an einem der Abstandshalter (30, 40, 42, 50, 52) oder an der oberen Ankerplatte (62, 65, 65') befestigt ist.

3. Brennstoffbündel (B) nach Anspruch 1, wobei die Trennvorrichtung eine Verwirbelungsschaufel (20) aufweist.

4. Brennstoffbündel (B) nach Anspruch 1, wobei die Trennvorrichtung ablenkende Ansatzstücke (25) aufweist.

5. Brennstoffbündel (B) nach Anspruch 1, wobei die Trennvorrichtung einen Kegel (30) aufweist, der nach unten angeordnet ist, wobei sein Scheitel in Richtung auf das Ende des Teillängenstabes angeordnet ist.

6. Brennstoffbündel (B) nach Anspruch 1, wobei mehrere Teillängenstäbe in dem Brennstoffbündel angeordnet sind und eine Trennvorrichtung (50, 52, 62, 65, 65', 70, 72, 74') über mehr als einem der Teillängenstäbe liegt.

7. Brennstoffbündel (B) nach Anspruch 1, wobei die obere Ankerplatte (U) eine Öffnung bildet, und die Trennvorrichtung (62, 65, 65') an der Öffnung durch die obere Ankerplatte hindurchführt.

8. Brennstoffbündel (B) nach Anspruch 1, wobei die Trennvorrichtung (70, 72) einen Wasserstab (W) mit der Trennvorrichtung aufweist.

## Revendications

1. Assemblage combustible (B) pour un réacteur nucléaire à eau bouillante, ledit assemblage combustible (B) comprenant :
- une plaque inférieure d'assemblage (L) destinée à soutenir une matrice de crayons de combustible (F) qui se dressent verticalement et définissant des orifices pour l'entrée d'eau dans ledit assemblage combustible,
- une plaque supérieure d'assemblage (U) destinée à maintenir ladite matrice de crayons de combustible (F) en position verticale et définissant des orifices qui permettent la sortie de l'eau et de la vapeur produite,
- un boîtier-canal (C) qui entoure ledit assemblage combustible (B) et s'étend de ladite plaque inférieure d'assemblage (L) à ladite plaque supérieure d'assemblage (U) pour confiner l'écoulement de fluide entre lesdites plaques d'assemblage et à travers ladite matrice de crayons de combustible,
- une pluralité de grilles d'espacement (S) à l'intérieur dudit boîtier-canal (C) et autour desdits crayons de combustible (F), qui maintiennent l'écartement de juxtaposition desdits crayons de combustible (F) entre lesdites plaques d'assemblage, et
- l'un au moins desdits crayons de combustible est un crayon de longueur partielle (P) qui repose sur ladite plaque inférieure d'assemblage (L) qui le soutient et se termine en une extrémité supérieure située en-dessous de ladite plaque supérieure d'assemblage (U), ledit crayon de longueur partielle (P) définissant par rapport aux crayons de longueur complète (F) qui l'entourent un volume vide (14) qui recouvre ledit crayon de longueur partielle (P) pour définir un trajet (14) d'évacuation de la vapeur entre l'extrémité supérieure dudit crayon de longueur partielle (P) et ladite plaque supérieure d'assemblage (U),
caractérisé par un dispositif de séparation (16, ... , 74) supporté par ledit assemblage combustible (B) et placé dans ledit trajet (14) d'évacuation de la vapeur qui recouvre ledit crayon de longueur partielle (P), ledit dispositif de séparation définissant des moyens pour dévier l'eau dudit trajet (14) d'évacuation de la vapeur vers lesdits crayons de longueur complète (F) environnants.

2. Assemblage combustible (B) selon la revendication 1, dans lequel ledit dispositif de séparation est fixé à l'extrémité dudit crayon de longueur partielle (16, 20, 25), est fixé à l'une desdites grilles d'espacement (30, 40, 42, 50, 52) ou est fixé à ladite plaque supérieure d'assemblage (62, 65, 65').

3. Assemblage combustible (B) selon la revendication 1, dans lequel ledit dispositif de séparation comprend une ailette à tourbillon (20).

4. Assemblage combustible (B) selon la revendication 1, dans lequel ledit dispositif de séparation comprend des languettes déflectrices (25).

5. Assemblage combustible (B) selon la revendication 1, dans lequel ledit dispositif de séparation comprend un cône (30), ledit cône (30) étant disposé vers le bas avec son apex en direction de l'extrémité dudit crayon de longueur partielle.

6. Assemblage combustible (B) selon la revendication 1, dans lequel une pluralité de tels crayons de longueur partielle sont placés dans ledit assemblage combustible et un dispositif de séparation (50, 52, 62, 65, 65', 70, 72, 74') recouvre plusieurs de ces crayons de longueur partielle.

7. Assemblage combustible (B) selon la revendication 1, dans lequel ladite plaque supérieure d'assemblage (U) définit une ouverture et ledit dispositif de séparation (62, 65, 65') traverse ladite plaque supérieure d'assemblage au niveau de ladite ouverture.

8. Assemblage combustible (B) selon la revendication 1, dans lequel ledit dispositif de séparation (70, 72) comprend un crayon d'eau (W) avec ledit dispositif de séparation.
